(19) **Europäisches Patentamt / European Patent Office / Office européen des brevets**

(11) **EP 1 845 705 A2**

(12) **DEMANDE DE BREVET EUROPEEN**

(43) Date de publication:
**17.10.2007 Bulletin 2007/42**

(51) Int Cl.:
***H04N 1/64*** *(2006.01)*

(21) Numéro de dépôt: **07105866.3**

(22) Date de dépôt: **10.04.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **12.04.2006 FR 0603250**

(71) Demandeur: **Sagem Communication
75015 Paris (FR)**

(72) Inventeur: **Deschamps, Lionel,
c/o SAGEM COMMUNICATION
75015 PARIS (FR)**

(74) Mandataire: **Le Forestier, Eric et al
Cabinet Régimbeau
20, rue de Chazelles
75847 Paris cedex 17 (FR)**

(54) **Scanner comportant des moyens de détermination de la nature de la zone balayée, procédé de commande correspondant**

(57) L'invention concerne un scanner comportant des moyens de balayage (7) d'un document (20), un émetteur (1000) de lumière apte à éclairer le document (20) et des capteurs (5) aptes à recevoir la lumière en retour après réflexion sur ledit document (20), pour scanner le document en couleur et/ou en noir et blanc, caractérisé en ce qu'il comporte des moyens (8) de commande et d'analyse aptes à commander l'émetteur (1000) et les capteurs (5), et à analyser les données scannées à la volée lors du balayage du document, pour déterminer périodiquement si la zone balayée est en couleur ou en noir et blanc.

L'invention concerne également un procédé de commande d'un tel scanner.

FIG.3A

**Description**

DOMAINE TECHNIQUE GENERAL

L'invention concerne un scanner comportant des moyens de balayage d'un document, un émetteur de lumière apte à éclairer le document et des capteurs aptes à recevoir la lumière en retour après réflexion sur ledit document, pour scanner le document en couleur et/ou en noir et blanc.
L'invention concerne également un procédé de commande d'un tel scanner.

ETAT DE L'ART

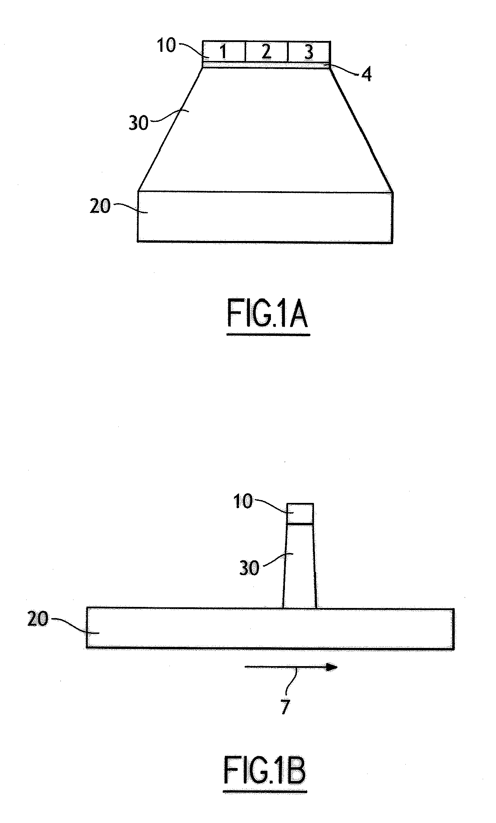

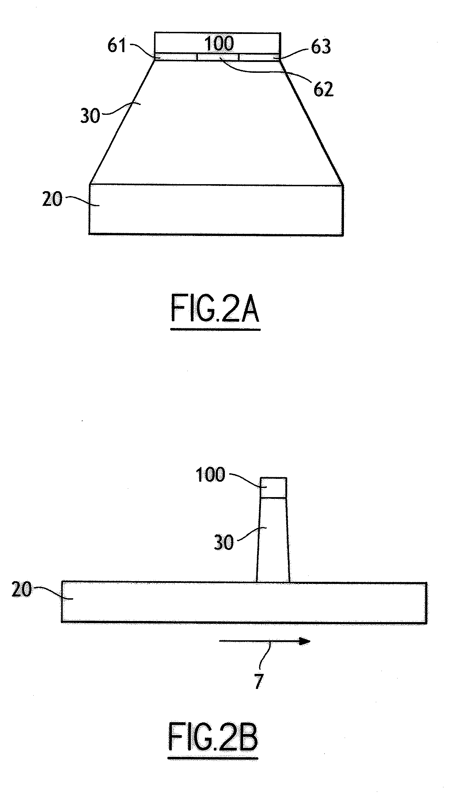

Les figures 1A, 1 B, 2A et 2B montrent schématiquement des scanners connus.

Les figures 1A et 1 B représentent ainsi un scanner utilisant un capteur de type CIS (Contact Image Sensor) selon la terminologie anglo-saxonne généralement utilisée par l'homme du métier, comportant un émetteur 10 comportant trois unités 1, 2 et 3.
L'unité 1 comporte des moyens d'éclairage pour l'envoi d'un faisceau 30 de couleur rouge éclairant un document 20 à scanner. L'unité 2 comporte des moyens d'éclairage pour l'envoi d'une couleur verte, et l'unité 3 comporte des moyens d'éclairage pour l'envoi d'une couleur bleue.
Le scanner comporte des capteurs 4 pour la réception du faisceau 30 en retour, après réflexion sur le document 20.
L'émetteur 10 projette successivement, sensiblement sur la même ligne du document 20, de la lumière rouge, verte et bleue grâce aux unités 1, 2 et 3. Le document 20 réfléchit tout ou partie de la lumière initialement envoyée et les capteurs 4 du scanner sont ainsi stimulés. Sensiblement la même ligne du document est ainsi éclairée trois fois - l'acquisition des trois faisceaux reçus permettant de réaliser un balayage en couleur du document 20 - , bien que, comme le montre la flèche 7, pendant l'acquisition, le document 20 ou le scanner se déplace afin de balayer l'intégralité du document.
Pendant l'envoi de la lumière par l'émetteur 10 et sa réception par les capteurs 4, le scanner transmet sous forme analogique le signal correspondant à l'acquisition précédente. Ainsi, pendant l'éclairage en rouge d'une ligne, le scanner transmet à un convertisseur analogique numérique (CAN) le signal correspondant à la composante bleue de la ligne du document 20 précédemment éclairée.
Il est plus simple de réaliser un balayage en noir et blanc du document 20. En effet dans ce cas, l'émetteur 10 n'éclaire chaque ligne du document 20 qu'avec une seule composante de lumière (rouge, verte ou bleue) ou avec un mélange des trois composantes.
Le temps d'acquisition T du balayage est une fonction de la résolution d'analyse Res, du nombre de composantes NbC (égal à 1 pour le noir et blanc (N&B), et égal à 3 pour la couleur) et du temps d'acquisition par composante. Le temps d'acquisition s'écrit, en supposant que l'on scanne une feuille de format A4 et que les spécifications du scanner CIS sont de 1.5 ms de temps d'acquisition par ligne de 216 mm (largeur du format A4) :

$$T(A4) = 0.0015 * Res * NbC * 29{,}7 / 2{,}54 \text{ (car il y a 2.54 cm par pouce).}$$

Le balayage du document 20 est donc trois fois plus rapide en noir et blanc (N&B) qu'en couleur.
On constate que les performances (vitesse, taille du fichier produit pour un éventuel transfert vers un autre périphérique tel qu'une imprimante ou un ordinateur - PC « Personal Computer ») pour un scanner utilisant un capteur de type CIS sont meilleures en N&B. En effet, le temps d'analyse des capteurs 4 du scanner CIS est plus court en N&B, mais la taille des données acquise est aussi plus faible en N&B qu'en couleur.
Les figures 2A et 2B représentent un scanner 100 utilisant un capteur de type CCD (Charge Coupled Device) selon la terminologie anglo-saxonne généralement utilisée par l'homme du métier, comportant trois capteurs 61, 62 et 63. Le capteur 61 est spécifique au rouge, le capteur 62 est spécifique au vert et le capteur 63 est spécifique au bleu.
Le scanner comporte également un émetteur 100 envoyant de la lumière blanche. Chaque ligne du document 20 n'est par conséquent éclairée qu'une seule fois, la couleur étant reconstituée grâce à l'acquisition simultanée des capteurs 61, 62 et 63.
La vitesse de balayage en couleur est la même que celle du balayage en noir et blanc pour un scanner du type CCD.
Cependant, les performances (taille du fichier produit pour un éventuel transfert vers un autre périphérique tel qu'une imprimante ou un PC) utilisant un capteur de type CCD sont meilleures en N&B. En effet, la taille des données acquises est plus faible en N&B qu'en couleur.

Certains documents comportent des zones en couleur et d'autres en N&B. Une possibilité pour optimiser les performances d'un scanner pour de tels documents est d'effectuer un prébalayage permettant de déterminer les zones du document qui sont soit en couleur soit en N&B. Cependant, le prébalayage prend du temps et diminue les performances en vitesse du scanner.

Ainsi les scanners de l'art antérieur n'ont pas des performances optimisées.

PRESENTATION DE L'INVENTION

L'invention propose de pallier ces inconvénients.

A cet effet, on propose selon l'invention un scanner comportant des moyens de balayage d'un document, un émetteur de lumière apte à éclairer le document et des capteurs aptes à recevoir la lumière en retour après réflexion sur ledit document, pour scanner le document en couleur et/ou en noir et blanc, caractérisé en ce qu'il comporte des moyens de commande et d'analyse aptes d'une part à commander l'émetteur et les capteurs, et d'autre part à analyser, à la volée lors du balayage du document, le scan pour déterminer périodiquement si une zone balayée est de nature couleur ou noir et blanc.

L'invention est avantageusement complétée par les caractéristiques suivantes, prises seules ou en une quelconque de leur combinaison techniquement possible :

- les moyens de balayage sont aptes à effectuer un retour en arrière lors du balayage ;
- l'émetteur et/ou les capteurs permettent une analyse du scan sur toute une dimension du document ;
- l'émetteur et/ou les capteurs permettent une analyse d'une dimension du document, en quelques points espacés ;
- l'émetteur et les capteurs sont du type CIS ;
- l'émetteur et les capteurs sont du type CCD ;
- le scanner comporte des moyens de segmentation aptes à segmenter des données d'un scan ;
- les moyens de segmentation sont aptes à intégrer les données dans un langage de commande d'imprimante ou dans un langage de commande d'une tête d'impression d'un dispositif d'impression ;
- les moyens de commande et d'analyse permettent de régler la période de détermination.

L'invention concerne également un procédé de commande d'un scanner correspondant.

L'invention présente de nombreux avantages.

L'invention permet d'augmenter les performances en vitesse du scanner.

Le temps d'analyse des capteurs du scanner et le temps de transfert des données sont notamment optimisés, sans prébalayage.

Dans le cas d'une application de l'invention pour une impression, le nombre de copies par minute est augmenté.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- les figures 1A, 1 B, 2A et 2B, déjà commentées, montrent schématiquement des scanners connus ; et
- les figures 3A et 3B montrent schématiquement un exemple d'un balayage d'un document par un scanner selon l'invention.

Sur l'ensemble des figures, les éléments similaires portent des références numériques identiques.

DESCRIPTION DETAILLEE

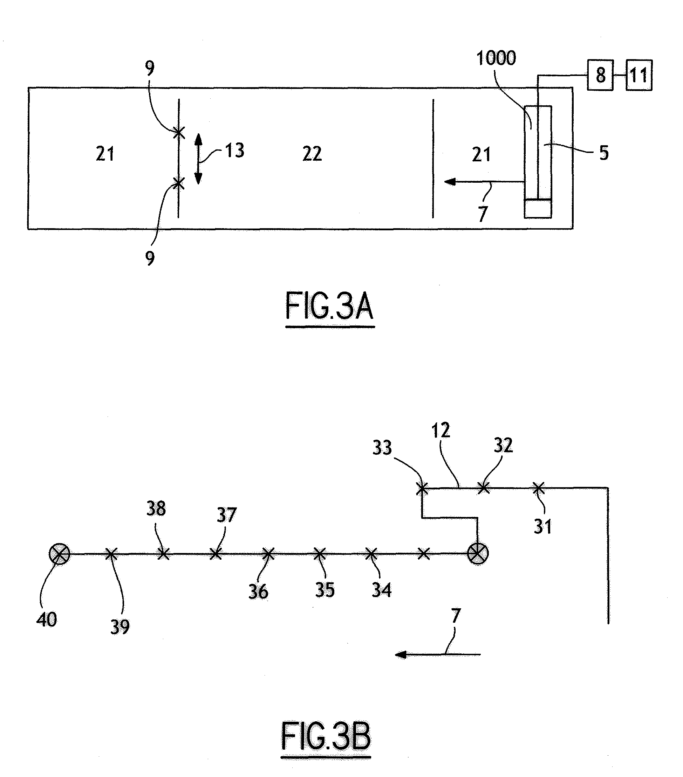

La figure 3A représente schématiquement un exemple d'un scanner comportant des moyens de balayage 7 d'un document 20, un émetteur 1000 de lumière apte à éclairer le document 20 et des capteurs 5 aptes à recevoir la lumière en retour après réflexion sur ledit document 20.

L'ensemble des moyens de balayage 7, de l'émetteur 1000 et des capteurs permet de scanner le document en couleur et/ou en noir et blanc.

Les moyens de balayage 7 comportent ainsi soit des moyens permettant de faire défiler le document 20 par rapport au scanner, l'émetteur 1000 étant fixe, soit de faire défiler l'émetteur 1000, le document étant fixe.

Le document 20 comporte par exemple des zones en noir et blanc (N&B) et des zones en couleur. Sur la figure 3A, les zones référencées par 21 sont par exemple en N&B, et la zone référencée par 22 est par exemple en couleur.

Le scanner comporte des moyens 8 de commande et d'analyse aptes d'une part à commander l'émetteur 1000 et les capteurs 5, et d'autre part à analyser, à la volée lors du balayage du document 20, les données scannées pour déterminer périodiquement si la zone balayée est de nature couleur ou noir et blanc.

L'émetteur 1000 et les capteurs 5 sont du type CIS ou de type non CIS - par exemple du type CCD - , et peuvent ainsi à la fois scanner un document en couleur et/ou en N&B.

Comme le montre la figure 3B, lors de la mise en fonctionnement du scanner, les moyens 8 commandent l'émetteur 1000 et les capteurs 5 pour qu'ils déterminent au point 31 la nature de la zone 21 balayée.

Comme la zone 21 est de nature N&B, cette nature est déterminée et le scanner commence à scanner le document en N&B.

Au point 32, à la volée lors du balayage du document 20, les moyens 8 commandent l'émetteur 1000 et les capteurs 5 pour déterminer la nature de la zone balayée.

Au point 32, la zone est toujours de nature N&B. Par conséquent, le scan du document 20 se poursuit en N&B.

Une détermination s'opère au point 33. Or, au point 33, la nature du document est couleur.

Une première mise en oeuvre d'un procédé selon l'invention, non représentée sur les figures, est de changer la nature du scan et continuer le scan du document 20 en couleur à partir du point 33.

On note que cette première mise en oeuvre engendre une perte d'information : la zone comprise entre le point 32 et le point 33 est scannée en N&B alors qu'elle comporte de la couleur. Cette mise en oeuvre est par exemple utilisée sur des scanners pour lesquels un retour en arrière n'est pas possible ou pas optimal.

Une deuxième mise en oeuvre avantageuse d'un procédé selon l'invention, représentée à la figure 3B, est d'effectuer un retour en arrière, grâce aux moyens de balayage, afin de retourner au point 32 précédent de détermination, d'effectuer un changement de la nature du scan et de scanner le document en couleur à partir du point 32. La deuxième mise en oeuvre a l'avantage de ne pas engendrer une perte d'information. Il n'y a en effet aucune perte d'information lors d'un scan en couleur d'une zone de nature N&B.

Le retour en arrière s'effectue avantageusement sans garder les données correspondant à la zone entre le point de retour en arrière et le point précédent de détermination. On n'encombre pas ainsi une mémoire du scanner.

On comprend que dans les deux cas, on détermine de nouveau périodiquement la nature du document, à la volée lors du balayage. Sur l'exemple de la figure 3B, la détermination périodique s'effectue aux points 33, 34, 35, 36, 37 et 38. Une détection de changement de la nature de la zone balayée s'effectue au point 38.

Un changement de la nature du scan s'opère alors à partir du point 38.

Très avantageusement, on n'effectue pas de retour en arrière au point 37. Il n'y a ainsi aucune perte d'information, car il y a juste eu un scan en couleur d'une zone en N&B située entre les points 37 et 38.

Une détermination s'effectue alors par exemple aux points 39 et 40 jusqu'à la fin du balayage du document 20.

Les moyens 8 permettent de régler la période 12 de détermination. Cette période est plus ou moins courte. Elle correspond à l'erreur maximale acceptée (soit la hauteur d'une zone couleur sur l'original que l'on accepte de récupérer analysée en N&B)-.

L'émetteur 1000 et/ou les capteurs 5 permettent un scan d'une dimension du document 20, c'est à dire un scan de la largeur ou de la longueur du document 20. La détermination « à la volée » de la nature de la zone scannée peut se faire à partir de points espacés 9. Les points sont par exemple espacés d'une distance 13. Le choix de la distance 13 dépend de la résolution que l'on souhaite sur le document. Il est ainsi également possible de scanner le document sur toute une dimension du document 20, c'est à dire que les points 9 de détection ne sont pas espacés les uns des autres ou ont un espacement très faible.

Le scanner comporte des moyens 11 de segmentation aptes à segmenter des données d'un scan les données du type couleur et celles du type noir et blanc. La segmentation permet un meilleur transfert (car le flux d'information comporte moins de données à transférer) et une meilleure gestion de dispositifs d'impression en aval du scanner par exemple. La segmentation permettent ainsi la gestion des espaces mémoire et/ou des têtes d'impression (encre couleur ou N&B par exemple).

Les moyens 11 de segmentation sont avantageusement aptes à intégrer les données dans un langage de commande d'imprimante ou « Printer Control Language » (PCL) selon la terminologie anglo-saxonne utilisée par l'homme du métier et/ou dans un langage de commande d'une tête d'impression d'un dispositif d'impression.

Les développements qui précèdent s'appliquent avantageusement aux scanners compris dans des dispositifs d'impression, notamment les dispositifs capables d'imprimer sur une même page de format A4 une suite de bandes "couleur" et "noir et blanc".

On comprend cependant que l'invention s'applique à n'importe quel type de scanner, comme à des applications de messagerie électronique par exemple.

**Revendications**

1. Scanner comportant :

   - des moyens de balayage (7) d'un document (20),
   - un émetteur (1000) de lumière apte à éclairer le document (20),
   - des capteurs (5) aptes à recevoir la lumière en retour après réflexion sur ledit document (20), et
   - des moyens (8) de commande et d'analyse aptes à commander l'émetteur (1000) et les capteurs (5) pour scanner le document en couleur et/ou en noir et blanc,

   **caractérisé en ce que**

   - les moyens (8) de commande et d'analyse sont en outre aptes à analyser le scan, à la volée lors du balayage du document, pour déterminer périodiquement, jusqu'à la fin du balayage du document (20), si une zone balayée est de nature couleur ou noir et blanc.

2. Scanner selon la revendication précédente, dans lequel les moyens de balayage (7) sont aptes à effectuer un retour en arrière lors du balayage.

3. Scanner selon l'une des revendications 1-2, dans lequel l'émetteur (1000) et/ou les capteurs (5) permettent une analyse du scan sur toute une dimension du document (20).

4. Scanner selon l'une des revendications 1-2, dans lequel l'émetteur (1000) et/ou les capteurs (5) permettent une analyse d'une dimension du document (20), en quelques points espacés (9).

5. Scanner selon l'une des revendications 1-4, dans lequel l'émetteur (1000) et les capteurs (5) sont du type CIS.

6. Scanner selon l'une des revendications 1-4, dans lequel l'émetteur (1000) et les capteurs (5) sont du type CCD.

7. Scanner selon l'une des revendications 1-6, comportant des moyens (11) de segmentation aptes à segmenter des données d'un scan.

8. Scanner selon la revendication précédente, dans lequel les moyens (11) de segmentation sont aptes à intégrer les données dans un langage de commande d'imprimante ou dans un langage de commande d'une tête d'impression d'un dispositif d'impression.

9. Scanner selon l'une des revendications 1-8, dans lequel les moyens (8) de commande et d'analyse permettent de régler la période (12) de détermination.

10. Procédé de commande d'un scanner, comportant les étapes de :

    - balayage d'un document (20) grâce à des moyens de balayage (7),
    - éclairage du document (20) grâce à un émetteur (1000) de lumière, et
    - réception de la lumière en retour après réflexion sur ledit document (20) grâce à des capteurs (5),
    - commande de l'émetteur (1000) et des capteurs (5) grâce à des moyens (8) de commande et d'analyse pour scanner le document en couleur et/ou en noir et blanc,

    **caractérisé en ce qu'**il comporte en outre

    - une étape d'analyse du scan grâce aux moyens (8) de commande et d'analyse, à la volée lors du balayage du document, pour déterminer périodiquement, jusqu'à la fin du balayage du document (20), si une zone balayée est de nature couleur ou noir et blanc.

11. Procédé selon la revendication précédente, comportant une étape de changement de la nature du scan lorsqu'un changement dans la nature de la zone balayée est déterminé.

12. Procédé selon l'une des deux revendications précédentes, comportant une étape de retour en arrière des moyens de balayage (7) lorsqu'un changement dans la nature de la zone balayée est déterminé.

**13.** Procédé selon la revendication précédente, dans lequel le retour en arrière s'effectue jusqu'à la détermination précédente.

**14.** Procédé selon la revendication précédente, dans lequel le retour en arrière s'effectue sans garder des données correspondant à la zone entre le point de retour en arrière et le point précédent de détermination.

**15.** Procédé selon l'une des revendications 12-14, comportant une étape de retour en arrière jusqu'à une détermination précédente lors d'une détermination d'un changement de nature de la zone balayée s'effectuant du noir et blanc vers la couleur et comportant une étape de changement de la nature du scan sans retour en arrière lors de la détermination d'un changement de nature de la zone balayée s'effectuant de la couleur vers le noir et blanc, de sorte que la zone de changement soit toujours scannée en couleur.

**16.** Procédé selon l'une des revendications 10-15, comportant une étape d'analyse du scan sur toute une dimension du document (20).

**17.** Procédé selon l'une des revendications 10-15, comportant une étape d'analyse du scan d'une dimension du document (20), en quelques points espacés (9).

**18.** Procédé selon l'une des revendications 10-17, comportant une étape de segmentation des données d'un scan respectivement des données du type couleur et celles du type noir et blanc grâce à des moyens (11) de segmentation.

**19.** Procédé selon la revendication précédente, dans lequel les moyens (11) de segmentation intègrent les données dans un langage de commande d'imprimante ou dans un langage de commande d'une tête d'impression d'un dispositif d'impression.

**20.** Procédé selon l'une des revendications 10-19, comportant une étape de réglage de la période de détermination par les moyens (8) de commande et d'analyse.

FIG.1A

FIG.1B

61     100     63

62

30

20

## FIG.2A

100

30

20

7

## FIG.2B

## FIG.3A

## FIG.3B